# EUROPÄISCHE PATENTSCHRIFT

(11) **EP 0 791 413 B1**
(45) Veröffentlichungstag und Bekanntmachung des Hinweises auf die Patenterteilung: **02.08.2000**
(21) Anmeldenummer: 97101667.0
(22) Anmeldetag: 04.02.1997
(51) Int. Cl.: B21C 33/00

(54) **Liegende Metallstrangpresse mit einer Vorrichtung zum Laden eines Blockes und gegebenenfalls einer Pressscheibe**
Horizontal metal-extrusion press with a device for loading billets and optionally pressing discs
Presse horizontale d'extrusion de métaux avec un dispositif pour le chargement des billettes et éventuellement des disques de poussée

(30) Priorität: 26.02.1996 DE 19606955
(43) Veröffentlichungstag der Anmeldung: 27.08.1997
(73) Patentinhaber: SMS Eumuco GmbH, 51377 Leverkusen (DE)
(72) Erfinder: Jakoby, Nikolaus, 40880 Ratingen (DE)
(74) Vertreter: Pollmeier, Felix, Dipl.-Ing.

(56) Entgegenhaltungen:
- EP-A- 0 074 549
- EP-A- 0 267 112
- EP-A- 0 428 989
- DE-A- 2 356 904
- DE-U- 9 214 125
- FR-A- 2 681 055

## Beschreibung

Die Erfindung bezieht sich auf eine liegende Metallstrangpresse mit einer Vorrichtung zum Laden eines Blockes und gegebenenfalls einer Preßscheibe in eine liegende Strangpresse, bei der in einer Ebene, zu der die Strangpressenachse senkrecht steht, ein Schubteil (Wagen, Schlitten, Schieber) schräg oder horizontal verfahrbar oder ein Schwenkteil (Schwenkarm) schwenkbar ist und der mit diesem verbundene Tragteil (Ladeschale, Zange, Büchse) aus einer Beschickungsposition in eine Zwischenposition und weiter in die Pressenachse verbringbar ist. Um Störungen im Arbeitsablauf auszuschließen ist ein genaues Anfahren der Positionen durch den Tragteil erforderlich. Um die im Rahmen eines Preßzyklus anfallenden Nebenzeiten zu minimieren ist es erforderlich die Zeit für das Laden eines Blockes kurz zu halten, was unter anderem ein schnelles Ein- und Ausbringen des Schub- bzw. Schwenkteils einschließlich des mit ihm verbundenen Tragteils erfordert. Die genannten Erfordernisse erschweren einander.

Aus dem Stand der Technik sind Metallstrangpressen mit unterschiedlichen Vorrichtungen zum Laden eines Blockes bekannt. Der nächstliegende Stand der Technik ist in zwei Dokumenten offenbart. EP 0 267 112 offenbart ein horizontal verfahrbares Schubteil zum Verbringen eines Blockes von einer Beschickungs- über eine Zwischenposition in die Pressenachse, EP 0 438 988 ein Schwenkteil. Die Merkmale dieser Vorrichtungen sind im Oberbegriff des Anspruchs 1 enthalten. Beiden ist gemeinsam, daß das genaue Anfahren der einzelnen Positionen eine Reduzierung der Verfahrgeschwindigkeit des Tragteils bedingt, was wiederum zu längeren Produktionszyklen führt.

Aufgabe der Erfindung ist es, das genaue Anfahren der Positionen trotz sehr hoher Schub- bzw. Schwenkgeschwindigkeit des mit dem Tragteil verbundenen Schub- bzw. Schwenkteils zu erreichen. Zur Lösung dieser Aufgabe wird gemäß Anspruch 1 der Schub- bzw. Schwenkteil einer Ladevorrichtung aus einem in einer Basisführung quer zur Pressenachse bewegbaren Basis-Schubteil bzw. aus einem um ein Basislager in der Ebene quer zur Pressenachse schwenkbaren Basis-Schwenkteil und aus einem mit dem Tragteil versehenen, in dem Basis-Schubteil bzw. Basis-Schwenkteil beweglichen Trabanten-Schubteil bzw. Trabanten-Schwenkteil gebildet, und dabei der Schubweg des Basis-Schubteils bzw. der Schwenkwinkel des Basis-Schwenkteils einerseits und der Schubweg des Trabanten-Schubteils bzw. der Schwenkwinkel des Trabanten-Schwenkteils im Basis-Schubteil bzw. Basis-Schwenkteil andererseits je einem der Weg- bzw. Winkelmaße zwischen der Beschickungsposition und der Zwischenstation, sowie der Zwischenstation und der Pressenachse entsprechen, und ferner das Basis-Schubteil bzw. Schwenkteil sowie das Trabanten-Schubteil bzw. Schwenkteil zeitversetzt oder gleichzeitig bewegbar sind.

Als Schub- bzw. Schwenkteil, mit dem der Weg von der Zwischenposition in die Pressenachse und zurück ausgeführt wird, wird mit besonderem Vorteil der Trabanten-Schubteil bzw. -Schwenkteil vorgesehen, denn der dem Abstand der Zwischenposition zur Pressenachse entsprechende Schubweg bzw. Schwenkweg ist in der Regel kürzer als der dem Abstand von Zwischenposition und Beschickungsposition entsprechende Schubweg bzw. Schwenkweg, wobei auch die geringere Masse des Trabanten-Schubteils bzw. -Schwenkteils der Minimierung der Nebenzeiten entgegenkommt. Für ein schnelles Ausfahren des mit dem Trabanten-Schubteil bzw. -Schwenkteil verbundenen Tragteils - worauf es in besonderem Maße ankommt - können zudem der Trabanten-Schubteil bzw. -Schwenkteil in dem Basis-Schubteil bzw. -Schwenkteil und dieser in der Basisführung bzw. um das Basislager gemeinsam, zeitgleich bewegt werden, so daß sich die Fahr- bzw. Schwenkgeschindigkeiten addieren. Wenn der Schub- bzw. Schwenkweg des Trabanten-Schubteils bzw. Schwenkteils geringer ist als der des Basis-Schubteils bzw. -Schwenkteils so ergibt sich eine zweite, zwischen der ersten Zwischenposition und der Beschickungsposition gelegene Zwischenposition indem nur der Trabanten-Schubteil bzw. -Schwenkteil auf die Pressenachse zu verfahren wird, wobei diese zweite Zwischenposition insbesondere für Wartungs- und Inspektionszwecke außerhalb des eigentlichen Pressenzyklus nutzbar ist.

Ausführungsbeispiele der Erfindung sind in den Zeichnungen dargestellt. Es zeigen die
- Figur 1: eine Ausführung mit Schubteilen in einer Seitenansicht in der Stellung des in die Pressenachse verbrachten Tragteils, zu der die
- Figur 2: eine Stirnansicht und die
- Figur 3: eine Aufsicht zeigt. In kleinerem Maßstab ist die Vorrichtung in
- Figur 4: mit sich in der Beschickungsposition, in
- Figur 5: mit sich in der Zwischenposition und in
- Figur 6: mit sich in einer weiteren, zweiten Zwischenposition befindlichen Tragteil dargestellt.
Eine Ausführung mit Schwenkteilen ist in der
- Figur 7: in einer Seitenansicht in der Stellung des in die Pressenachse verbrachten Tragteils und in kleinerem Maßstab in
- Figur 8: mit sich in der Beschickungsposition und in
- Figur 9: mit sich in der Zwischenposition befindenden Tragteil dargestellt.

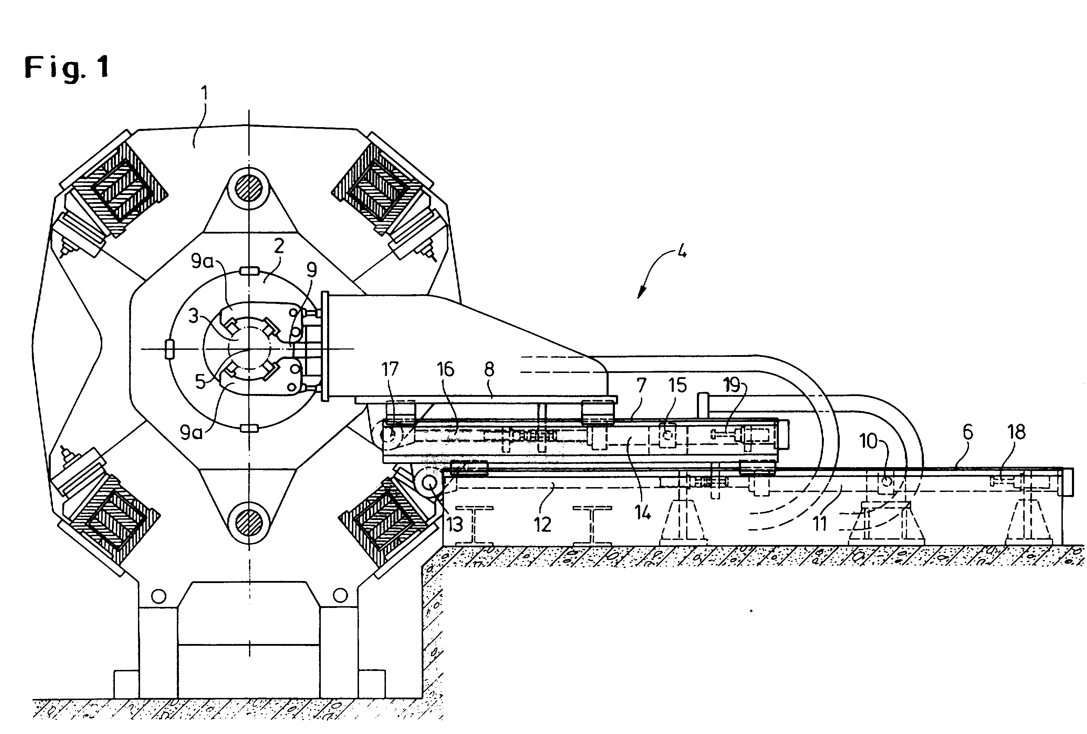

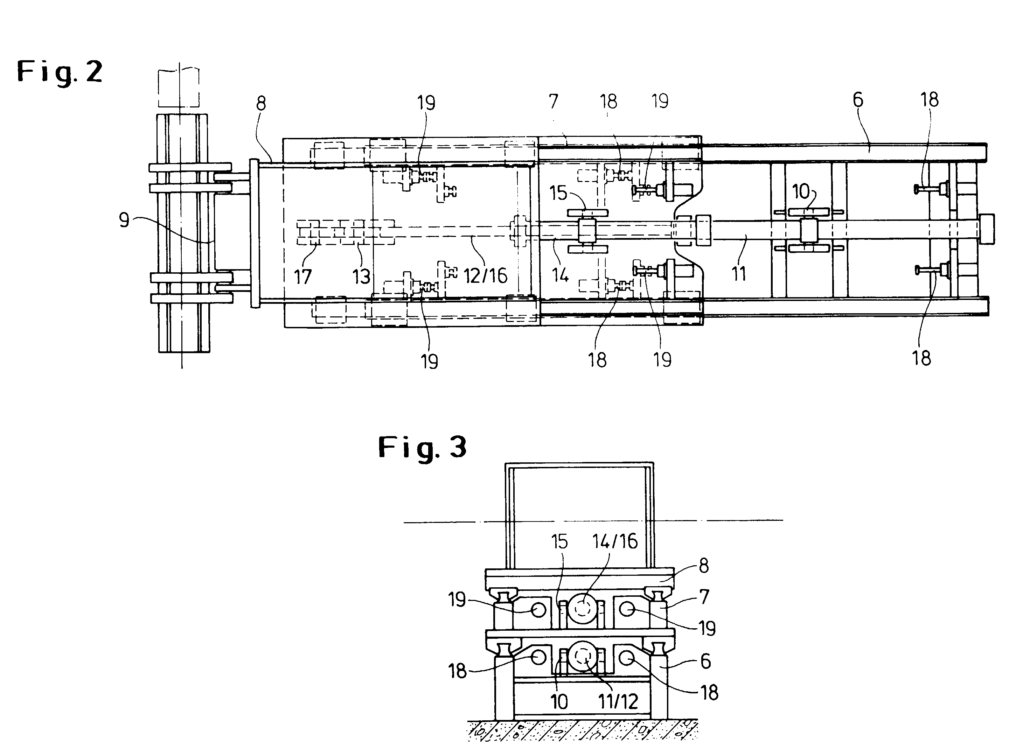

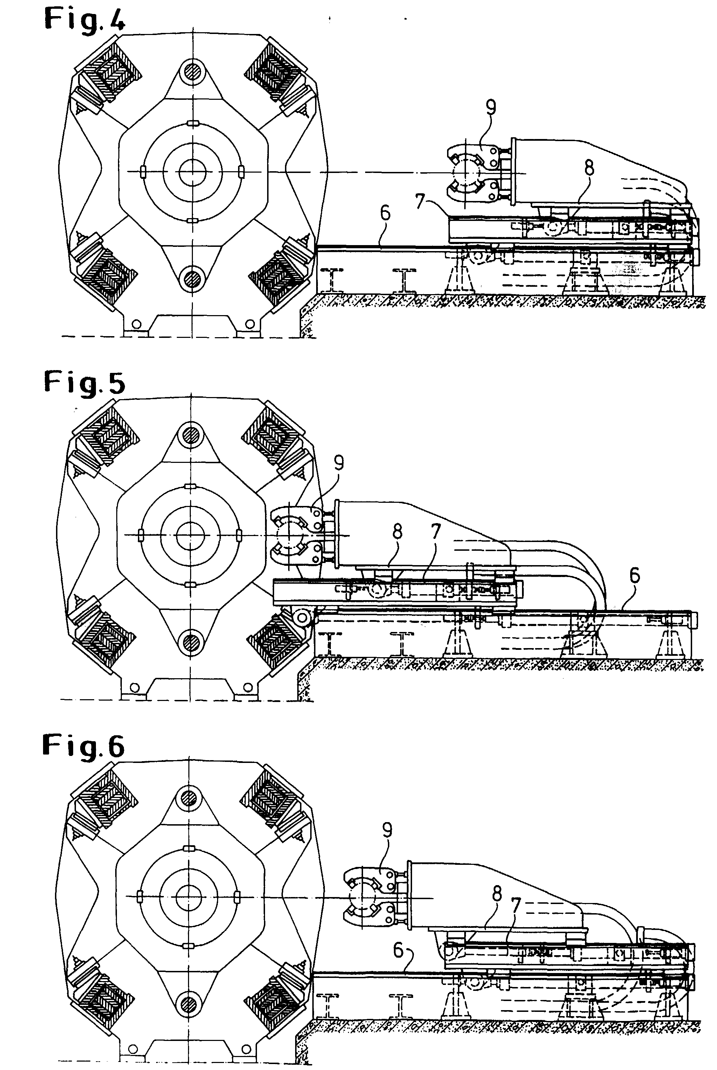

In Fig. 1 ist mit 1 eine Strangpresse bezeichnet, aus deren Blockaufnehmer 2 heraus ein in diesen einzubringender Block 3 verpreßt wird. Hierzu ist bei dem in den Fig. 1 bis 3 dargestellten Ausführungsbeispiel eine Ladevorrichtung 4 mit horizontal im rechten Winkel zur Achse 5 der Strangpresse 1 bewegbaren Schubteil vorgesehen. Die Ladevorrichtung 4 besteht aus einem in einer Basisführung 6 horizontal beweglichen Basis-Schubteil 7 und einem in diesem ebenfalls horizontal beweglich geführten Trabanten-Schubteil 8, welcher an seiner der Pressenachse 5 zugekehrten Stirnseite mit einem zangenartig ausgebildeten Tragteil 9 versehen ist. In der in Fig. 1 dargestellten Stellung ist der Tragteil 9 mit dem von ihm getragenen Block 3 in die Pressenachse 5 eingefahren, so daß der Block 3 in die Bohrung des Blockaufnehmers 2 verbracht werden kann. Sobald der Block 3 so weit in den Blockaufnehmer 2 verbracht ist, daß er keine Unterstützung durch den Tragteil 9 mehr benötigt, wird der Tragteil 9 (im Ausführungsbeispiel nach dem Öffnen der ihn bildenden Zangenarme 9a) aus der Pressenachse 5 und dem Arbeitsbereich der beweglichen Bauteile der Strangpresse 1 - wie dem Fahrweg des Blockaufnehmers 3 - ausgefahren bis in die in Fig. 4 dargestellte Endstellung, die zugleich die Beschickungsposition bildet, in der ein von einem nicht dargestellten Ofen kommender folgender Block 3 in den Tragteil 9 eingebracht wird. Zur Minimierung der Nebenzeiten des Strangpreßvorgangs werden beim Ausfahren der Trabanten-Schubteil 8 im Basis-Schubteil 7 und der Basis-Schubteil 7 in der Basisführung 6 gleichzeitig bewegt, so daß sich deren Fahrgeschindigkeiten addieren.

Zum Verschieben des Basis-Schubteils 7 in der Basisführung 6 ist in letzterer im Stützpunkt 10 der Zylinder 11 einer Kolbenzylindereinheit abgestützt, deren Kolbenstange 12 bei 13 mit dem Trabanten-Schubteil 8 verbunden ist. Der Zylinder 14 einer weiteren Kolben-Zylinder-Einheit ist im Stützpunkt 15 im Basis-Schubteil 7 abgestützt und die Kolbenstange 16 dieser Kolben-Zylinder-Einheit ist mit dem Trabanten-Schubteil 8 bei 17 verbunden. Der Fahrweg des Basis-Schubteils 7 in der Basisführung 6 ist durch verstellbare Anschläge 18 und der Fahrweg des Trabanten-Schubteils 8 im Basis-Schubteil 7 ist durch verstellbare Anschläge 19 begrenzt.

Sobald in der in Fig. 4 dargestellten Beschickungsposition ein neuer Block 3 für einen nächsten Preßvorgang in den Tragteil 9 geladen ist, wird der Basis-Schubteil 7 mittels der Kolben-Zylinder-Einheit 12/11 in der Basisführung 6 auf die Strangpresse 1 zu verfahren und nimmt dabei den Trabanten-Schubteil 8 mit, so daß der Tragteil 9 in die in Fig. 5 dargestellte Zwischenposition gelangt, die als Wartestellung und/oder für die Berußung der Blockstirnfläche, für die Inspektion des Blockes, das Einfahren eines Schiebers für den Blockvorschub, das Feststellen der jeweiligen Blocklänge und dergleichen Hilfsoperationen vorgesehen ist. Nach Abschluß der vorbereitenden Operationen wird der Trabanten-Schubteil 8 mittels der Kolben-Zylinder-Einheit 16/14 im Basis-Schubteil 7 auf die Strangpresse 1 zu verschoben bis in die in Fig. 1 dargestellte Stellung, in der sich der Tragteil 9 mit dem von ihm getragenen neuen Block 3 in der Pressenachse 5 befindet, so daß ein weiterer Preßvorgang ablaufen kann.

Eine andere Zwischenposition des Trabanten-Schubteils 8 mit dem Tragteil 9 ist in der Fig. 6 dargestellt. Diese Zwischenposition wird erreicht, indem der Trabanten-Schubteil 8 in dem Basis-Schubteil 7 auf die Strangpresse 1 zu verschoben ist, der Basis-Schubteil 7 jedoch in seiner von der Strangpresse 1 entferntesten Position verbleibt. In dieser Zwischenposition können andere als die vorerwähnten Inspektions- und Wartungsarbeiten durchgeführt werden, die außerhalb des üblichen Pressenzyklus erforderlich werden.

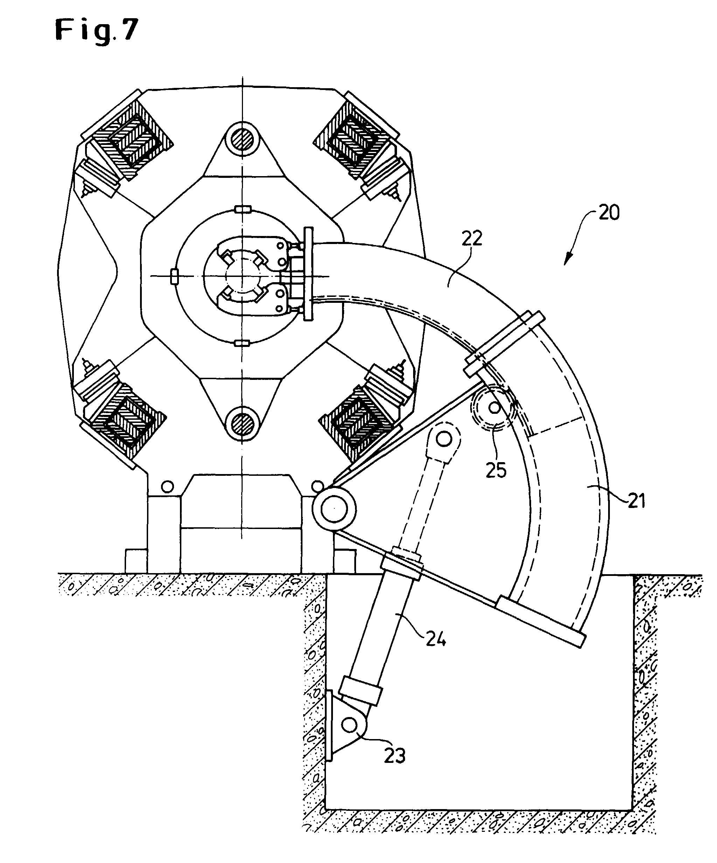

Das in den Fig. 7 bis 9 dargestellte Ausführungsbeispiel zeigt eine Ladevorrichtung 20, die aus einem in einer Ebene, zu der die Pressenachse 5 senkrecht steht, schwenkbaren Basis-Schwenkteil 21 und einem Trabanten-Schwenkteil 22 besteht. Das Basis-Schwenkteil 21 ist um ein Basislager 23 mittels einer Kolben-Zylinder-Einheit 24 schwenkbar. In dem Basis-Schwenkteil 21 geführt ist das Trabanten-Schwenkteil 22, welches über ein von einem nicht dargestellten Motor und Getriebe angetriebenes Ritzel 25 in dem Basis-Schwenkteil 21 bewegbar ist.

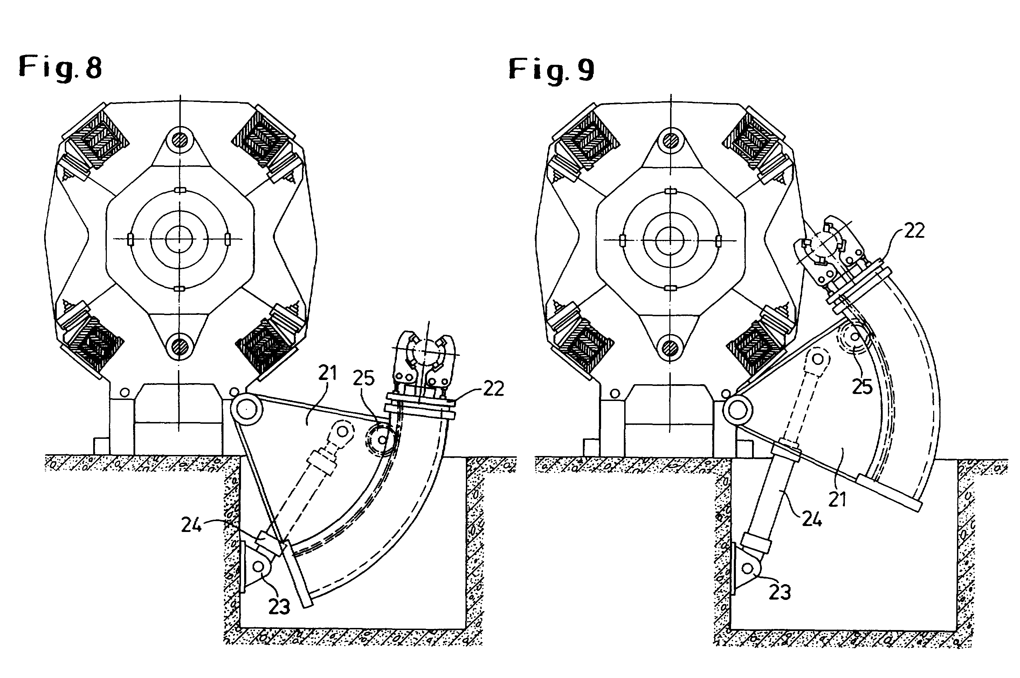

Der Arbeitsablauf ist bei beiden Ausführungsbeispielen einander entsprechend, wobei die Positionen der Fig. 1 und Fig. 7, die Beschickungsposition der Fig. 4 und Fig. 8 sowie die Zwischenposition der Fig. 5 und Fig. 9 einander entsprechen.

## Patentansprüche

1. Liegende Metallstrangpresse mit einer Vorrichtung zum Laden eines Blockes (3) und gegebenenfalls einer Preßscheibe, bestehend aus einem in einer Ebene quer zur Achse (5) der Strangpresse gradlinig schräg oder horizontal verfahrbaren oder schwenkbaren, mit einem Tragteil (9, 9a) für den Block (3) und gegebenenfalls die Preßscheibe versehenen Schub- oder Schwenkteil, mit dem der Tragteil (9, 9a) von einer Beschickungsposition über eine Zwischenposition in die Pressenachse (5) einbringbar ist,
**dadurch gekennzeichnet,**
daß ein mit dem Tragteil (9, 9a) für den Block (3) verbundener Schub- bzw. Schwenkteil (8 bzw. 22) für den Schubweg bzw. Schwenkwinkel zwischen der Zwischenposition und der Pressenachse (5) bemessen und als Trabanten-Schub- bzw. Schwenkteil (8 bzw. 22) ausgebildet ist und daß ein Basis-Schub- bzw. Schwenkteil (7 bzw. 21) für einen Schubweg bzw. Schwenkwinkel zwischen der Beschickungsposition und der Zwischenposition vorgesehen und bemessen ist, wobei der Basisschubteil (7) bzw. Basisschwenkteil (21) sowie der Trabanten-Schub- bzw. Schwenkteil (8 bzw. 22) gegenüber dem Basis-Schub- bzw. schwenkteil (7 bzw. 21) zeitversetzt oder gleichzeitig bewegbar sind.

2. Liegende Metallstrangpresse nach Anspruch 1,
**dadurch gekennzeichnet,**
daß der Schubweg des Basis-Schubteils (7) bzw. der Schwenkwinkel des Basis-Schwenkteils (21) für den Weg des Tragteils (9, 9a) zwischen der Beschickungsposition und der Zwischenposition und der Schubweg des Trabanten-Schubteils (8) bzw. der Schwenkwinkel des Trabanten-Schwenkteils (22) im Basis-Schubteil (7) bzw. -Schwenkteil (21) für den Weg des Tragteils (9, 9a) zwischen der Zwischenposition und der Pressenachse vorgesehen ist.

3. Liegende Metallstrangpresse nach Anspruch 2,
**dadurch gekennzeichnet,**
daß der Schub- bzw. Schwenkweg des Trabanten-Schubteils (8) bzw. -Schwenkteils (22) geringer bemessen ist als der Schub- bzw. Schwenkweg des Basis-Schubteils (7) bzw. -Schwenkteils (21).

## Claims

1. Horizontal metal extrusion press with a device for the charging of a block (3) and, in a given case, a press disc, the device consisting of a thrust or pivot member which is pivotable or movable rectilinearly obliquely or horizontally in a plane transverse to the axis (5) of the extrusion press, is provided with a carrier part (9, 9a) for the block (3) and possibly with the press disc and by which the carrier part (9, 9a) is introducible from a charging position by way of an intermediate position into the press axis (5), characterised in that a thrust or pivot part (8 or 22), which is connected with the carrier part (9, 9a) for the block (3), is dimensioned for the thrust travel or the pivot angle between the intermediate position and the press axis (5) and constructed as satellite thrust or pivot part (8 or 22) and that a base thrust or pivot part (7 or 21) is provided and dimensioned for a thrust travel or pivot angle between the charging position and the intermediate position, wherein the base thrust part (7) or pivot part (21) as well as the satellite thrust or pivot part (8 or 22) are movable relative to the base thrust or pivot part (7 or 21) simultaneously or displaced in time.

2. Horizontal metal extrusion press according to claim 1, characterised in that the thrust travel of the base thrust part (7) or the pivot angle of the base pivot part (21) is provided for the travel of the carrier part (9, 9a) between the charging position and the intermediate position and the thrust travel of the satellite thrust part (8) or the pivot angle of the satellite pivot part (22) in the base thrust part (7) or the base pivot part (21) is provided for the travel of the carrier part (9, 9a) between the intermediate position and the press axis.

3. Horizontal metal extrusion press according to claim 2, characterised in that the thrust or pivot travel of the satellite thrust part (8) or of the satellite pivot part (22) is dimensioned to be less than the thrust or pivot travel of the base thrust part (7) or of the base pivot part (21).

## Revendications

1. Extrudeuse horizontale pour métal, comportant un dispositif pour charger un bloc (3) et le cas échéant un grain de poussée, constitué par une pièce coulissante mobile en translation en ligne droite, en oblique ou horizontalement, ou par une pièce basculante mobile en basculement, dans un plan perpendiculairement à l'axe (5) de l'extrudeuse, pourvue d'une pièce porteuse (9, 9a) pour le bloc (3) et le cas échéant pour le grain de poussée, et la pièce porteuse (9, 9a) est susceptible d'être amenée depuis une position de chargement via une position intermédiaire jusque dans l'axe (5) de l'extrudeuse au moyen de ladite pièce coulissante ou basculante, caractérisée en ce qu'une pièce coulissante ou basculante (8 ou 22) reliée à la pièce porteuse (9, 9a) pour le bloc (3) est dimensionnée en fonction du trajet de translation ou de l'angle de basculement entre la position intermédiaire et l'axe (5) de l'extrudeuse, et est réalisée sous forme de pièce coulissante ou basculante satellite (8 ou 22), et en ce qu'une pièce coulissante ou basculante de base (7 ou 21) est prévue et dimensionnée en fonction d'un trajet de translation ou d'un angle de basculement entre la position de chargement et la position intermédiaire, la pièce coulissante de base (7) ou la pièce basculante de base (21) ainsi que la pièce coulissante ou basculante satellite (8 ou 22) étant mobiles de façon décalée dans le temps ou bien simultanément par rapport à la pièce coulissante ou basculante de base (7 ou 21).

2. Extrudeuse horizontale pour métal selon la revendication 1, caractérisée en ce que le trajet de translation de la pièce coulissante de base (7) ou l'angle de basculement de la pièce basculante de base (21) est prévu en fonction du trajet de la pièce porteuse (9, 9a) entre la position de chargement et la position intermédiaire, et le trajet de translation de la pièce coulissante satellite (8) ou l'angle de basculement de la pièce basculante satellite (22) dans la pièce coulissante de base (7) ou dans la pièce basculante de base (21) est prévu en fonction du trajet de la pièce porteuse (9, 9a) entre la position intermédiaire et l'axe de l'extrudeuse.

3. Extrudeuse horizontale pour métal selon la revendication 2, caractérisée en ce que le trajet de translation ou l'angle de basculement de la pièce coulissante satellite (8) ou de la pièce basculante satellite (22) est dimensionné plus petit que le trajet de translation ou l'angle de basculement de la pièce coulissante de base (7) ou de la pièce basculante de base (21).
